# EUROPÄISCHE PATENTSCHRIFT

(11) **EP 2 303 071 B1**
(45) Veröffentlichungstag und Bekanntmachung des Hinweises auf die Patenterteilung: **06.05.2015**
(21) Anmeldenummer: 09777377.4
(22) Anmeldetag: 23.07.2009
(51) Int. Cl.: A01G 9/02, A47G 7/02

(54) **VORRICHTUNG ZUR ERHÖHUNG DER STANDSICHERHEIT VON GEFÄSSEN, WIE TÖPFEN, VASEN ODER DERGLEICHEN**
DEVICE FOR INCREASING THE STABILITY OF VESSELS, SUCH AS POTS, VASES OR SIMILAR
DISPOSITIF POUR ACCROÎTRE LA STABILITÉ DE RÉCIPIENTS, TELS QUE POTS, VASES OU SIMILAIRES

(30) Priorität: 23.07.2008 DE 202008009930 U
(43) Veröffentlichungstag der Anmeldung: 06.04.2011
(73) Patentinhaber: Gabbert, Chistiane, 47803 Krefeld (DE); Spohn, Annette, 49214 Bad Rothenfelde (DE); Winter, Sabine, 59227 Ahlen (DE)
(72) Erfinder: Gabbert, Chistiane, 47803 Krefeld (DE); Spohn, Annette, 49214 Bad Rothenfelde (DE); Winter, Sabine, 59227 Ahlen (DE)
(74) Vertreter: DR. STARK & PARTNER
(86) Internationale Anmeldenummer: PCT/EP2009/005336
(87) Internationale Veröffentlichungsnummer: WO 2010/009883

(56) Entgegenhaltungen:
- EP-A1- 0 369 633
- EP-A2- 0 829 216
- BE-A1- 883 760
- FR-A1- 2 557 761
- US-A- 4 949 502
- US-A- 4 989 820

## Beschreibung

Die Erfindung betrifft eine Vorrichtung zur Erhöhung der Standsicherheit von Gefäßen.

Eine dergleiche Vorrichtung ist aus EP 0 829 216 A2 bekannt.

Die Präsentation von beispielsweise Topfpflanzen, beispielsweise in Baumschulen oder in Pflanzcentern, erweist sich regelmäßig als problematisch, da die Topfpflanzen, beispielsweise bei Berührung oder bei Windstößen, leicht umkippen, so dass ein erneutes Aufrichten erforderlich ist. Im ungünstigsten Fall kann es nicht nur zu einem Umkippen der betreffenden Topfpflanze, sondern auch zu einem Umkippen benachbarter Topfpflanzen kommen, so dass das Aufrichten dementsprechend zeitaufwendiger ist. Auch kann es durch das Umkippen zu Beschädigungen der Topfpflanzen kommen.

Die üblicherweise verwendeten Pflanzgefäße können dabei einen runden Querschnitt aufweisen, und sie können ein Volumen von ca. 3 bis 7 Litern fassen. Der Durchmesser kann hierbei ca. 10 bis 40 cm, vorzugsweise 15 bis 25 cm, insbesondere 23 cm, betragen.

Aufgabe der Erfindung ist es, die vorgenannten Nachteile zu vermeiden und eine Vorrichtung anzugeben, mittels derer die Standsicherheit von Gefäßen erhöht werden kann und die leicht mit dem zu sichernden Gefäß verbunden werden kann.

Diese Aufgabe wird gelöst durh eine Vorrichtung zur Erhöhung der Standsicherheit von Gefäßen, wie Töpfen, Vasen oder dergleichen gemäß Anspruch 1, die zumindest drei Stützpunkte hat, die weiter auskragen als die unterseitige Standfläche des zu sichernden Gefäßes und die im wesentlichen gleichmäßig über den Umfang des zu sichernden Gefäßes verteilt, in etwa auf der Höhe der unterseitigen Standfläche angeordnet sind, wobei das zu sichernde Gefäß und die Vorrichtung durch zumindest ein entsprechend ausgebildetes Befestigungsmittel, insbesondere lösbar, aneinander befestigt sind.

Die Vorrichtung wird einfach an dem zu sichernden Gefäß befestigt. Da die Stützpunkte weiter auskragen als die unterseitige Standfläche des Gefäßes, wird damit die Standsicherheit vergrößert. Es liegt auf der Hand, dass jeder Stützpunkt nur eine punktuelle Berührfläche nach Art eines Beines mit dem Untergrund aber auch eine linienförmige Berührung haben kann. Selbstverständlich können benachbarte Stützpunkte auch ineinander übergehen und damit eine größere Berührfläche bilden. Die Stützpunkte können vorzugsweise genau in etwa auf der Höhe der unterseitigen Standfläche des Gefäßes im gesicherten Zustand sein, da dann die Vorrichtung u. a. das Gewicht des Gefäßes nicht tragen muss. Es ist aber auch durchaus möglich, dass die Stützpunkte geringfügig tiefer sind, so dass dann im gesicherten Zustand die Standfläche des Gefäßes nicht mehr den Untergrund berührt.

Zumindest ein Stützpunkt kann als sich zumindest auch vertikal erstreckender Wandbereich ausgebildet sein.

Zumindest ein Stützpunkt kann Teil eines umlaufenden Ringes sein. In diesem Fall bilden die Stützpunkte einen umlaufenden Ring. Der Ring kann eine runde, insbesondere kreisrunde, oder aber auch eckige, insbesondere viereckige Ausgestaltung, aufweisen. Bei einer solchen Ausführungsform bildet der Ring eine Einführöffnung, in die das zu sichernde Gefäß eingeführt und damit befestigt ist. Selbstverständlich kann der Ring auch durch angrenzende benachbarte Wandbereiche gebildet sein.

Zumindest ein Befestigungselement ist als Klemmeelement und/oder formschlüssig befestigendes Element und/oder durch Reibung haltendes Element für das Gefäß ausgebildet. Vorzugsweise sind mehrere verteilt angeordnete Elemente, insbesondere Klemmelemente vorgesehen. Zum Einführen des zu sichernden Gefäßes in die Vorrichtung wird zumindest ein Element/Klemmelement gegen eine Rückstellkraft in eine die Einführöffnung der Vorrichtung vergrößernde Position verlagert. Im eingeklemmten Zustand übt jedes Klemmelement aufgrund der Rückstellkraft eine Klemmkraft auf das Gefäß aus. Das Gefäß kann durch einfaches Herausziehen wieder aus der Vorrichtung entfernt werden.

Als Klemmelement kann beispielsweise bei ringförmiger Ausbildung der Vorrichtung ein in die Einführöffnung hineinragender umlaufender Gummiring vorgesehen sein, der im gesicherten Zustand von außen auf das Gefäß drückt und dieses damit klemmt. Selbstverständlich kann das Klemmelement auch nur bereichsweise auf das Gefäß wirken.

Es liegt auf der Hand, dass alle Befestigungselemente als Klemmelemente ausgebildet sein können, was sich insbesondere bei einer Ausführungsform anbietet, bei der die Stützpunkte als umlaufender Ring ausgebildet sind. Die Klemmelemente erstrecken sich im nicht gesicherten Zustand in etwa horizontal und bilden die Einführöffnung. Die Klemmflächen der Klemmelemente sind in etwa gleichmäßig über den Umfang des zu sichernden Gefäßes verteilt angeordnet.

Bei einer möglichen Ausführungsform können die Klemmelemente gegen eine von einer Feder erzeugten Rückstellkraft zum Sichern des Gehäuses verlagert werden.

Zum Einführen des zu sichernden Gefäßes in die Vorrichtung ist zumindest ein Klemmelement gegen eine Rückstellkraft in Richtung der unterseitigen Stützpunkte auslenkbar, insbesondere verbiegbar, und auch im eingeklemmten Zustand übt jedes Klemmelement aufgrund der Rückstellkraft eine Klemmkraft auf das Gefäß aus. Aufgrund der Auslenkung zumindest eines Klemmelementes wird die Einführöffnung der Vorrichtung vergrößert, so dass damit das Gefäß einführbar ist. Das Klemmelement kann beispielsweise aus einem Federstahl bestehen.

Die Vorrichtung weist Klemmelemente unterschiedlicher Länge auf. Vorzugsweise sind von zumindest zwei unterschiedlichen Längen, jeweils mehrere über den Umfang verteilt angeordnete Klemmelemente vorgesehen. Sind beispielsweise drei Gruppen von Klemmelementen unterschiedlicher Länge vorgesehen, bietet sich an, wenn bei einer runden Ausgestaltung die drei Gruppen um einen Winkel von etwa 15° versetzt zueinander angeordnet sind. Damit können Gefäße unterschiedlicher Größen gesichert werden, da die Klemmelemente entsprechend der Größe des Gefäßes verlagert werden.

Wird ein Gefäß mit einer kleinen Größe gesichert, kann eine Sicherung beispielsweise nur durch die Klemmelemente der größten Länge erfolgen, da ein Kontakt mit den Klemmelementen kürzerer Länge evtl. nicht erfolgt. Werden dagegen Gefäße größeren Durchmessers gesichert, sichern die Klemmelemente größerer Länge im unteren Bereich des Gefäßes während die Klemmelemente geringerer Länge in höheren Bereichen das Gefäß berühren, so dass das Gefäß in einem größerer Bereich, bezogen auf die Höhe, gesichert wird.

Die Vorrichtung kann über den Umfang gesehen aus zumindest zwei gegeneinander fixierbaren, insbesondere durch Einstecken ineinander fixierbaren, Ringteilelementen bestehen.

Die Vorrichtung kann zur Anpassung an unterschiedliche Durchmesser von Gefäßen in seinem Umfang veränderbar sein.

Dabei kann die Vorrichtung aus einer auf die für einen konkreten Anwendungsfall erforderliche Länge kürzbaren Profilware bestehen und in eine runde, insbesondere kreisrunde Form, bringbar sein.

Zumindest ein Befestigungselement kann als Stützelement ausgebildet sein. Bei einer solchen Ausführungsform ist beispielsweise ein Klemmelement einem Stützelement gegenüberliegend angeordnet. Das Stützelement dient als eine Art Widerlager, gegen das das Gefäß durch zumindest ein Klemmelement gedrückt wird.

Die Vorrichtung kann aus Kunststoff bestehen. Damit kann die Vorrichtung einfach durch Spritzgießen hergestellt werden. Die Stützpunkte und die Klemmelemente und damit die ganze Vorrichtung können einteilig ausgebildet sein.

Die Vorrichtung weist zumindest ein, insbesondere seitlich vorstehendes, Verriegelungselement auf, das mit einem korrespondierenden Verriegelungselement einer benachbarten Vorrichtung in Eingriff bringbar ist. Beispielsweise kann ein Verriegelungselement als Vorsprung ausgebildet sein, der in eine entsprechend als Verriegelungselement ausgebildete Ausnehmung einer benachbarten Vorrichtung eingreift. Hierdurch können benachbarte Vorrichtungen gegeneinander gesichert werden.

Im Folgenden werden in den Zeichnungen dargestellte Ausführungsbeispiele der Erfindung erläutert. Es zeigen:
- Fig. 1: ein erstes Ausführungsbeispiel einer nicht-erfindungsgemäßen Vorrichtung,
- Fig. 2: ein weiteres Ausführungsbeispiel einer nicht-erfindungsgemäßen Vorrichtung,
- Fig. 3: eine schräge Draufsicht auf ein weiteres Ausführungsbeispiel,
- Fig. 4: eine Seitenansicht auf den Gegenstand nach Fig. 3,
- Fig. 5: einen Schnitt durch den Gegenstand nach Fig. 4,
- Fig. 6: eine Draufsicht auf ein weiteres nicht erfindungsgemäßes Ausführungsbeispiel,
- Fig. 7: eine Draufsicht auf eine erfindungsgemäße Vorrichtung mit unregelmäßig über den Umfang verteilt angeordneten Vorsprüngen und schlitzförmigen Ausnehmungen und
- Fig. 8: eine Draufsicht auf mehrere miteinander verbundene Vorrichtungen gemäß Fig. 7.

In allen Figuren werden für gleiche bzw. gleichartige Bauteile übereinstimmende Bezugszeichen verwendet.

Die Figuren zeigen unterschiedliche Ausführungsformen einer Vorrichtung zur Erhöhung der Standsicherheit eines Gefäßes 1.

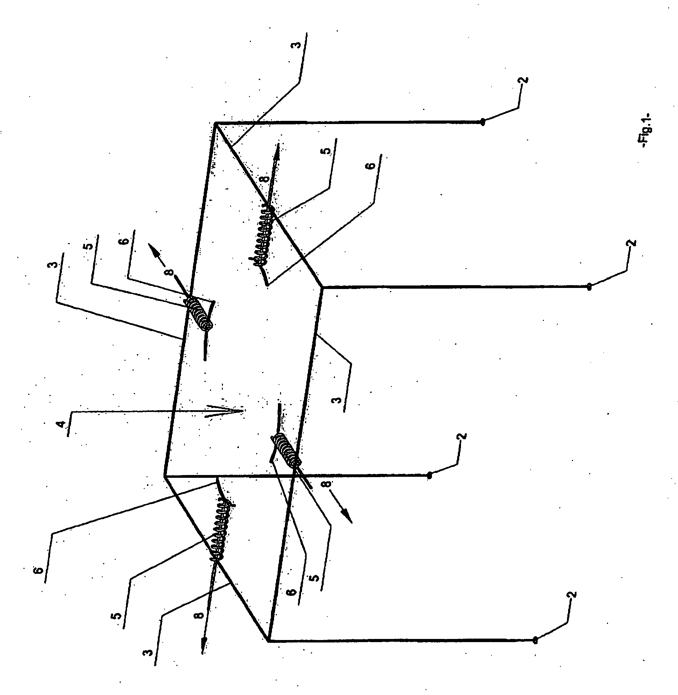

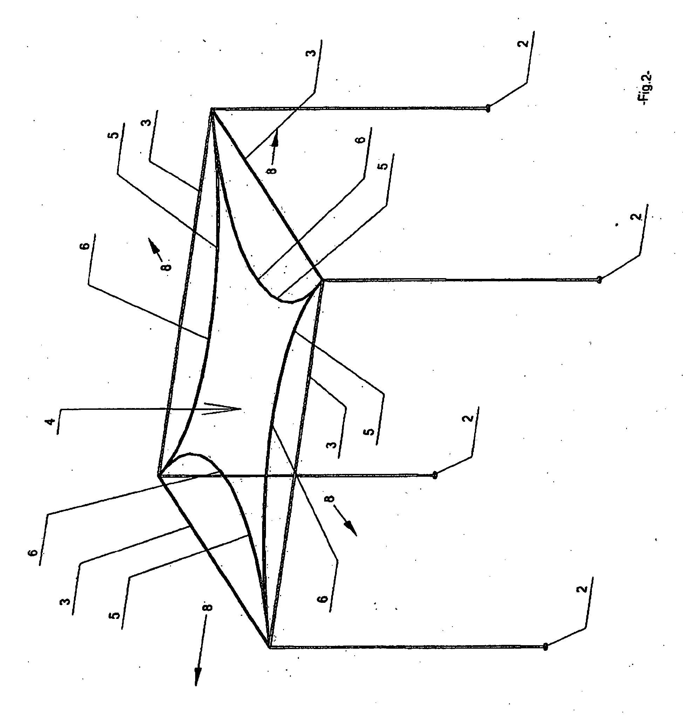

Die in Fig. 1 dargestellte Ausführungsform weist insgesamt vier Stützpunkte 2 auf, die ein Viereck bilden. Die Stützpunkte 2 bei den in den Fig. 1 und 2 dargestellten Ausführungsbeispielen stellen dabei die Beine der gestellartig ausgebildeten Vorrichtung dar.

Benachbarte Beine sind dabei über eine horizontal ausgerichtete Verbindungsstange 3 untereinander verbunden, wobei die Verbindungstangen 3 ein Viereck mit einer mittigen Einführöffnung 4 aufspannen. In der Mitte einer jeden Verbindungsstange 3 ist jeweils ein als Klemmelement 5 ausgebildetes Befestigungsmittel mit einer Klemmfläche 6 vorgesehen.

Jedes Klemmelement 5 hat bei dem Ausführungsbeispiel nach Fig. 1 eine in etwa T-förmige Ausgestaltung, wobei jede Klemmfläche 6 gekrümmt ausgebildet ist, so dass sich diese Vorrichtung insbesondere für runde Gefäße 1 anbietet. Jedes Klemmelement 5 ist entgegen einer durch eine Feder 7 ausgeübte Rückstellkraft in Richtung der Pfeile 8 nach außen verlagerbar, so dass damit die zwischen den Klemmelementen 5 gebildete Einführöffnung 4 zum Einführen eines nicht dargestellten Gefäßes 1 vergrößerbar ist.

Je größer das zu sichernde Gefäß 1 ist, desto mehr werden die Klemmelemente 5 nach außen entgegen die Rückstellkraft verlagert. Im eingeführten Zustand befindet sich die Standfläche 9 des gesicherten Gefäßes 1 in etwa in Höhe der Stützpunkte 2 und die Klemmelemente 5 üben eine Klemmkraft auf die Außenseite des zu sichernden Gefäßes 1 aus.

Bei dem in Fig. 2 dargestellten Ausführungsbeispiel erstreckt sich jedes Klemmelement 5 von einem Ende einer Verbindungsstange 3 zu dem anderen Ende der betreffenden Verbindungsstange 3 und ist in Richtung zur Einführöffnung 4 hin gebogen ausgebildet. Beim Einführen eines nicht dargestellten Gefäßes 1 wird jedes Klemmelement 5 in Richtung der Pfeile 8 verlagert. Die Klemmelemente 5 können beispielsweise aus Federstahl ausgebildet sein.

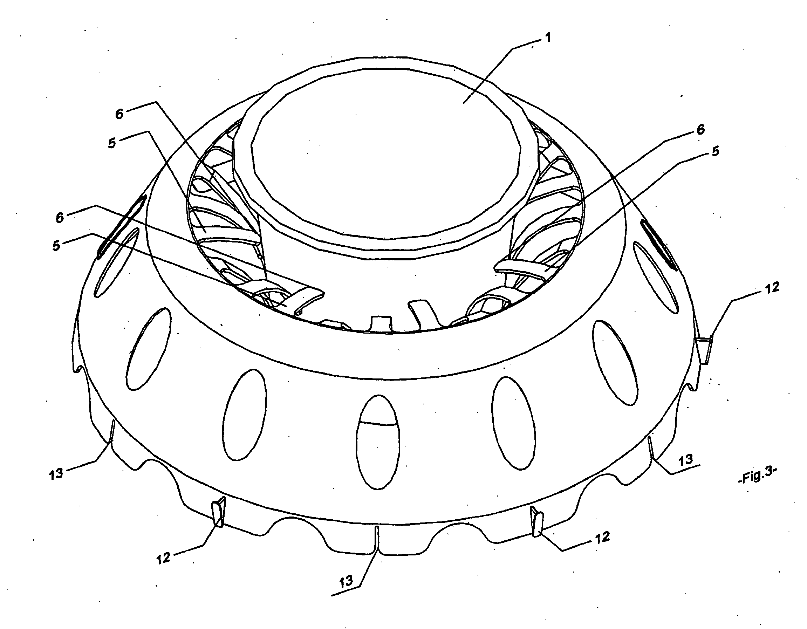

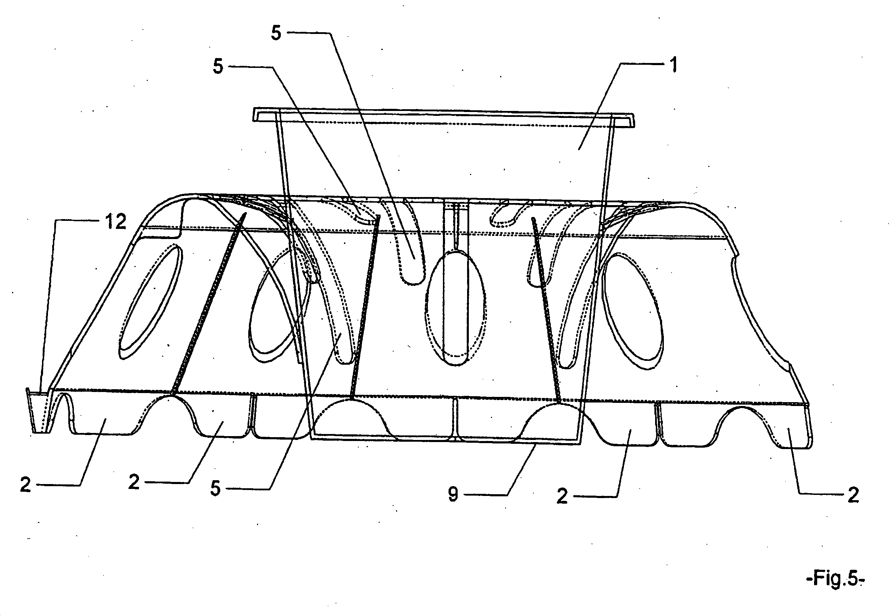

Bei den in den Fig. 3 bis 6 dargestellten Ausführungsbeispielen sind die Stützpunkte 2 als sich auch vertikal erstreckende Wandbereiche ausgebildet und bilden einen umlaufenden Ring. Es liegt auf der Hand, dass der Ring auch eine umlaufende auf gleicher Höhe befindliche Unterkante haben kann. Im Bereich der umlaufenden Oberkante des Ringes sind die in etwa horizontal ausgerichteten Klemmelemente 5 vorgesehen, die beim Einführen eines Gefäßes 1 in die Einführöffnung 4 in Richtung des Pfeils 10 nach unten verlagert, insbesondere verbogen, werden. Bei dem dargestellten Ausführungsbeispielen sind der Ring und die Klemmelemente 5 einteilig ausgebildet und bestehen beispielsweise aus Kunststoff. Damit ist die Vorrichtung sehr einfach herstellbar und auch stapelbar.

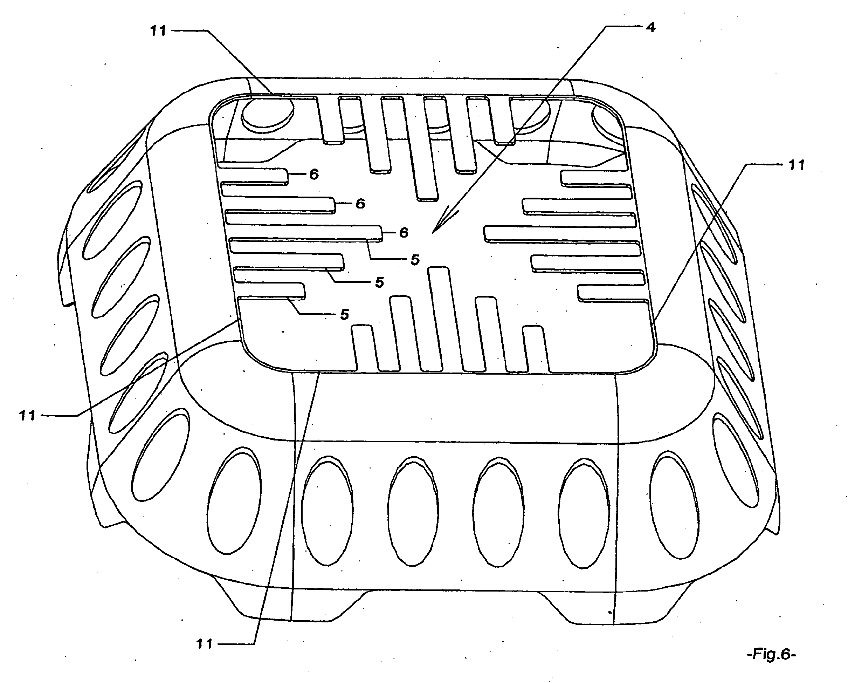

Deutlich erkennbar sind mehrere Gruppen von Klemmelementen 5 unterschiedlicher Länge. Wie beispielsweise Fig. 3 zu entnehmen ist, sind bei einer runden Ausgestaltung die Gruppen an Klemmelementen 5 unterschiedlicher Länge zueinander versetzt angeordnet. In Fig. 6 ist eine Ausführungsform dargestellt, bei der die Einführöffnung 4 von vier Kanten 11 umgeben wird. Hier ist etwa in der Mitte jeder Kante 11 das Klemmelement 5 mit der größten Länge vorgesehen. Jeweils beidseitig von diesem Klemmelement 5 schließen sich die Klemmelemente 5 mit abnehmender Länge in Richtung der angrenzenden Ecke an.

Bei den Ausführungsbeispielen nach den Fig. 3 bis 6 sind drei Gruppen von Klemmelementen 5 unterschiedlicher Länge vorgesehen. Damit findet eine, bezogen auf die Höhe des Gefäßes 1, 3-stufige Sicherung des in diesem Falle gesicherten Gefäßes 1 statt. Im gesicherten Zustand findet im unteren Bereich ein Klemmen des Gefäßes 1 mit den Klemmelementen 5 der größten Länge statt, während in den darüber liegenden Bereichen zunächst eine Sicherung durch die Klemmelemente 5 mit der mittleren und dann wiederum im darüber liegenden Bereich durch die Klemmelemente 5 mit der kleinsten Länge erfolgt.

Wie deutlich zu erkennen ist, sind im Bereich der Unterkante der Vorrichtung seitlich vorstehende Verriegelungselemente 12, 13 vorgesehen, die einerseits als Vorsprung 12 und andererseits als schlitzförmige Ausnehmung 13 ausgebildet sind, so dass auf diese Weise benachbarte Vorrichtungen durch Einführen des Vorsprunges 12 der einen Vorrichtung in die schlitzförmige Ausnehmung 13 der benachbarten anderen Vorrichtung in Eingriff bringbar sind.

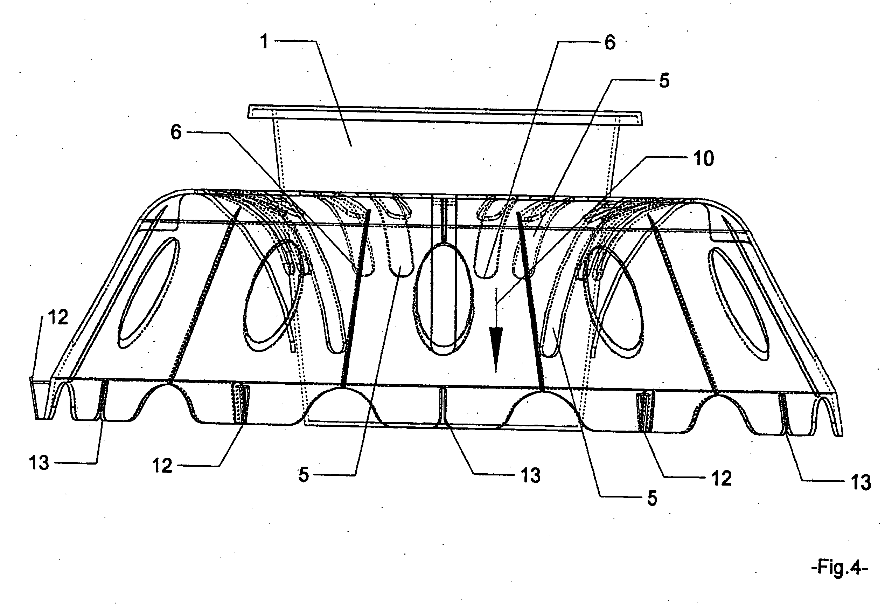

Bei dem Ausführungsbeispiel nach den Figuren 3 und 4 sind die Vorsprünge 12 und die schlitzförmigen Ausnehmungen 13 in einem regelmäßigen Abstand und 45° versetzt zueinander verteilt über den Umfang angeordnet.

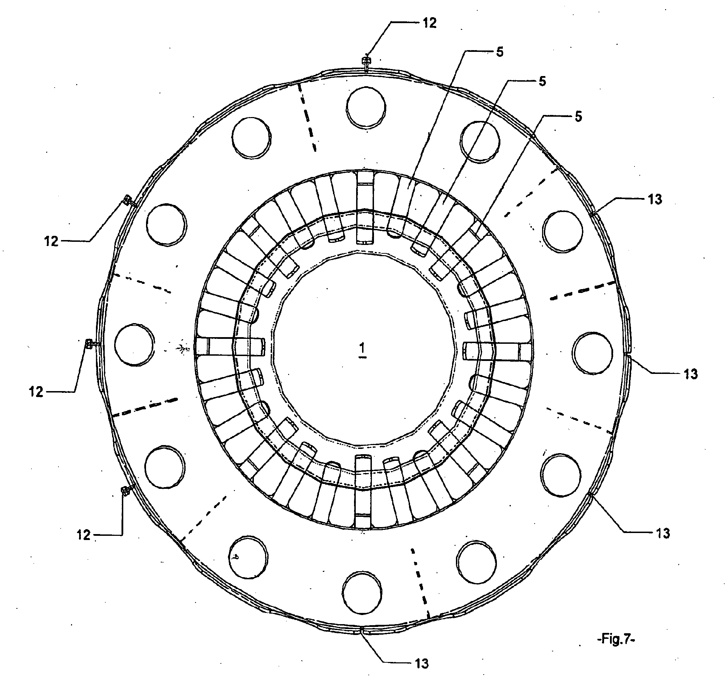

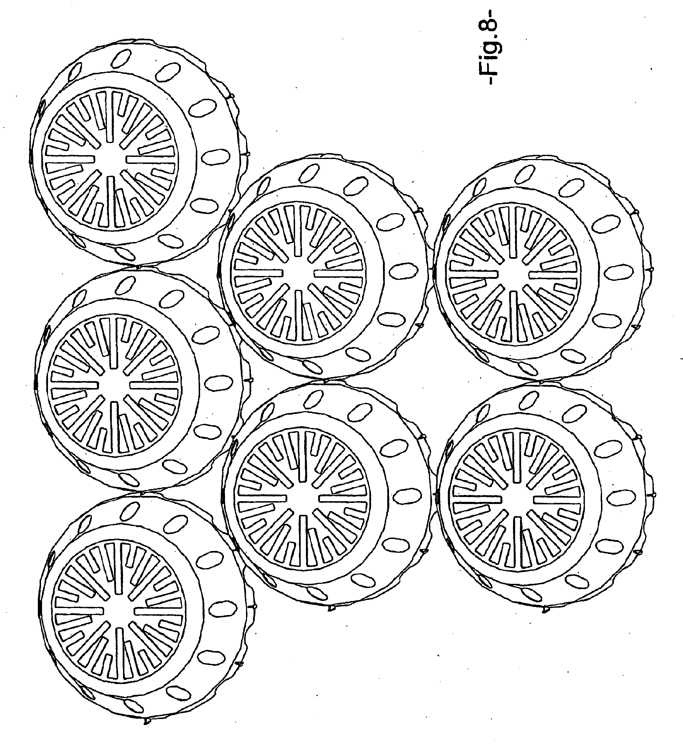

In Fig. 7 ist eine andere Anordnung der Vorsprünge 12 und der schlitzförmigen Ausnehmungen 13 vorgesehen, so dass die erfindungsgemäße Vorrichtung auf zwei verschiedene "Arten", so wie sie in Fig. 8 dargestellt sind, miteinander verbunden sind.

Wie in der Draufsicht in Fig. 7 zu erkennen ist, sind jeweils drei benachbart angeordnete Vorsprünge 12 und in dem gegenüberliegenden Bereich der Vorrichtung drei benachbart angeordnete schlitzförmige Ausnehmungen 13 vorgesehen. Zusätzlich ist bezogen auf den mittleren Vorsprung 12 der benachbarten drei Vorsprünge 12 im 90° Winkel hierzu ein weiterer Vorsprung 12 vorgesehen. Das gleiche gilt für die schlitzförmigen Ausnehmungen 13. Damit können benachbarte Vorrichtungen so verbunden werden, dass entweder vier Vorrichtungen ein Viereck bilden oder drei Vorrichtungen ein Dreieck bilden, was in Fig. 8 zu erkennen ist.

## Patentansprüche

1. Vorrichtung zur Erhöhung der Standsicherheit von Gefäßen (1), wie Töpfen, Vasen oder dergleichen, die zumindest drei Stützpunkte (2) hat, die weiter auskragen als die unterseitige Standfläche (9) des zu sichernden Gefäßes (1) und die im wesentlichen gleichmäßig über den Umfang des zu sichernden Gefäßes (1) verteilt, in etwa auf der Höhe der unterseitigen Standfläche (9) angeordnet sind, wobei das zu sichernde Gefäß (1) und die Vorrichtung durch zumindest ein entsprechend ausgebildetes Befestigungsmittel, insbesondere lösbar, aneinander befestigbar sind, wobei zumindest ein Befestigungselement als Klemmeelement (5) und/oder formschlüssig befestigendes Element und/oder durch Reibung haltendes Element für das Gefäß (1) ausgebildet ist, **dass** zum Einführen des zu sichernden Gefäßes (1) in die Vorrichtung zumindest ein Klemmelement (5) gegen eine Rückstellkraft in Richtung der unterseitigen Stützpunkte (2) auslenkbar, insbesondere verbiegbar, ist und auch im eingeklemmten Zustand jedes Klemmelement (5) aufgrund der Rückstellkraft eine Klemmkraft auf das Gefäß (1) ausübt, **dass** die Vorrichtung Klemmelemente (5) unterschiedlicher Länge aufweist und **dass** die Vorrichtung zumindest ein, insbesondere seitlich vorstehendes, Verriegelungselement (12, 13) aufweist, das mit einem korrespondierenden Verriegelungselement (12, 13) einer benachbarten Vorrichtung in Eingriff bringbar ist.

2. Vorrichtung nach dem vorhergehenden Anspruch, **dadurch gekennzeichnet, dass** zumindest ein Stützpunkt (2) als sich zumindest auch vertikal erstreckender Wandbereich ausgebildet ist.

3. Vorrichtung nach einem der vorhergehenden Ansprüche, **dadurch gekennzeichnet, dass** zumindest ein Stützpunkt (2) Teil eines umlaufenden Ringes ist.

4. Vorrichtung nach einem der vorhergehenden Ansprüche, **dadurch gekennzeichnet, dass** von zumindest zwei unterschiedlichen Längen, jeweils mehrere über den Umfang verteilt angeordnete Klemmelemente (5) vorgesehen sind.

5. Vorrichtung nach **Anspruch** 3 und 4, soweit dieser auf Anspruch 3 rückbezogen ist, **dadurch gekennzeichnet, das**s die Vorrichtung über den Umfang gesehen aus zumindest zwei gegeneinander fixierbaren, insbesondere durch Einstecken ineinander fixierbaren, Ringteilelementen besteht.

6. Vorrichtung nach einem der vorhergehenden Ansprüche, **dadurch gekennzeichnet, dass** die Vorrichtung zur Anpassung an unterschiedliche Durchmesser von Gefäßen (1) in seinem Umfang veränderbar ist.

7. Vorrichtung nach einem der vorhergehenden Ansprüche, **dadurch gekennzeichnet, dass** die Vorrichtung aus einer auf die für einen konkreten Anwendungsfall erforderliche Länge kürzbaren Profilware besteht und in eine runde, insbesondere kreisrunde Form, bringbar ist.

8. Vorrichtung nach einem der vorhergehenden Ansprüche, **dadurch gekennzeichnet, dass** zumindest ein Befestigungselement als Stützelement ausgebildet ist.

9. Vorrichtung nach einem der vorhergehenden Ansprüche, **dadurch gekennzeichnet, dass** die Vorrichtung aus Kunststoff besteht.

## Claims

1. Device for increasing the stability of vessels (1), such as saucepans, vases, or similar, which has at least three support points (2) that extend further than the lower side of the base (9) of the vessel (1) that is to be secured and are essentially evenly distributed over the circumference of the vessel (1) that is to be secured, at approximately the height of the lower side of the base, wherein the vessel (1) that is to be secured and the device can be secured to each other by at least one correspondingly formed securing means, in particular in a detachable manner, wherein at least one securing means is formed as a clamp element (5) and/or an element secured by positive fit and/or retained by friction for the vessel (1), and that, for the introduction of the vessel (1) that is to be secured into the device, at least one clamp element (5) can be deflected, in particular bent, against a reset or restore force in the direction of the underside support points (2), and that, in the clamped state, every clamp element (5), due to the reset or restore force, exerts a clamping force onto the vessel (1), and that the device comprises clamp elements (5) of different lengths, and that the device comprises at least one locking element (12, 13), particular projecting laterally, that can be brought into engagement with a corresponding locking element (12, 13) of an adjacent device.

2. Device according to claim 1, **characterised in that** at least one support point (2) is also formed at least as a wall sector extending vertically.

3. Device according to any one of the preceding claims, **characterised in that** at least one support point (2) is part of a circumferential ring.

4. Device according to any one of the preceding claims, **characterised in that** clamp elements (5) are provided, of at least two different lengths, distributed in each case over the circumference.

5. Device according to claims 3 and 4, inasmuch as this reverts to claim 3, **characterised in that** the device, seen over the circumference, consists of at least two ring part elements, which can be fixed opposite one another, in particular by being plugged into one another.

6. Device according to any one of the preceding claims, **characterised in that** the device for adjusting to the different diameters of vessels (1) can be changed in its circumference.

7. Device according to any one of the preceding claims, **characterised in that** the device consists of a profile material which can be shortened to a length required for a specific application situation, and can be applied in a round, in particular circular, shape.

8. Device according to any one of the preceding claims, **characterised in that** at least one securing element is formed as a support element.

9. Device according to any one of the preceding claims, **characterised in that** the device is made of plastic.

## Revendications

1. Dispositif conçu pour accroître la stabilité de récipients (1) tels que des pots, des vases ou des objets similaires, et doté d'au moins trois points d'appui (2) qui présentent un débord plus accentué que celui de la surface inférieure d'assise (9) du récipient (1) à stabiliser, et sont situés approximativement à la hauteur de ladite surface inférieure d'assise (9) et étant, pour l'essentiel, uniformément répartis sur le pourtour dudit récipient (1) à stabiliser, ledit dispositif et ledit récipient (1) à stabiliser pouvant être fixés l'un à l'autre, en particulier de manière libérable, par l'intermédiaire d'au moins un moyen de fixation offrant une réalisation correspondante, sachant qu'au moins un élément de fixation est réalisé sous la forme d'un élément de coincement (5) et/ou d'un élément instaurant une fixation par conformation, et/ou d'un élément dévolu audit récipient (1) et assurant une retenue par frottement ; sachant qu'en vue d'introduire ledit récipient (1) à stabiliser, dans ledit dispositif, au moins un élément de coincement (5) peut accomplir une excursion pivotante en direction des points inférieurs d'appui (2) et peut notamment être verrouillé, en opposition à une force de rappel, chaque élément de coincement (5) appliquant alors une force de coincement audit récipient (1) sous l'effet de ladite force de rappel, également à l'état d'engagement positif par coincement ; sachant que le dispositif comporte des éléments de coincement (5) de longueurs différentes ; et sachant que ledit dispositif est pourvu d'au moins un élément de verrouillage (12, 13) faisant notamment saillie dans le sens latéral, qui peut être mis en prise avec un élément complémentaire de verrouillage (12, 13) d'un dispositif voisin.

2. Dispositif selon la revendication précédente, **caractérisé par le fait qu'**au moins un point d'appui (2) est réalisé sous la forme d'une région de paroi s'étendant au moins également dans le sens vertical.

3. Dispositif selon l'une des revendications précédentes, **caractérisé par le fait qu'**au moins un point d'appui (2) fait partie intégrante d'une bague circonférentielle.

4. Dispositif selon l'une des revendications précédentes, **caractérisé par le fait que**, parmi au moins deux longueurs différentes, plusieurs éléments de coincement (5) sont respectivement prévus avec répartition uniforme sur le pourtour.

5. Dispositif selon les revendications 3 et 4, cette dernière étant rattachée à la revendication 3, **caractérisé par le fait que** ledit dispositif est constitué, observé sur le pourtour, d'au moins deux éléments partiellement annulaires qui peuvent être consignés à demeure l'un contre l'autre, notamment bloqués à demeure par emboîtement l'un dans l'autre.

6. Dispositif selon l'une des revendications précédentes, **caractérisé par le fait que** le pourtour dudit dispositif peut être modifié en vue de l'adaptation à différents diamètres de récipients (1).

7. Dispositif selon l'une des revendications précédentes, **caractérisé par le fait que** ledit dispositif est constitué d'un article profilé qui peut être raccourci à la longueur requise pour un cas d'application concret et peut être amené à une forme ronde, en particulier circulaire.

8. Dispositif selon l'une des revendications précédentes, **caractérisé par le fait qu'**au moins un élément de fixation est réalisé en tant qu'élément d'appui.

9. Dispositif selon l'une des revendications précédentes, **caractérisé par le fait que** ledit dispositif consiste en une matière plastique.
